# EUROPÄISCHE PATENTANMELDUNG

(11) **EP 2 562 960 A1**
(43) Veröffentlichungstag der Anmeldung: **27.02.2013**
(21) Anmeldenummer: 11178475.7
(22) Anmeldetag: 23.08.2011
(51) Int. Cl.: H04L 12/24, H04L 12/437, H04L 29/14, H04L 12/26, H04L 12/70

(54) **Redundantes Datenübertragungsverfahren in einem Kommunikationsnetzwerk**

(71) Anmelder: SIEMENS AKTIENGESELLSCHAFT, 80333 München (DE)
(72) Erfinder: Angst, Hermann, 76199 Karlsruhe (DE); Keller, Stefan, 76337 Waldbronn (DE); Sinn, Ulrich, 91056 Erlangen (DE); Lohmeyer, Joachim, 91161 Hilpoltstein (DE)

(57) **Zusammenfassung**

Die Erfindung beschreibt ein Verfahren in einem Kommunikationsnetzwerk zur redundanten Übertragung von Daten. Das Kommunikationsnetz umfasst eine Mehrzahl an Kopplungselementen (SW), welche jeweils zumindest einen ersten und einen zweiten Koppelport (P1, P2) aufweisen, wobei die Kopplungslemente (SW) über Kommunikationsverbindungen (KV) physikalisch in Ringtopologie verschaltet sind. Eine jeweilige Kommunikationsverbindung (KV) verbindet den ersten Koppelport (P1) eines Kopplungselements (SW) mit dem zweiten Koppelport (P2) eines anderen Kopplungselements (SW). In einem der Kopplungselemente (SW) ist eine Redundanzmanagementfunktionalität (MRM) implementiert, welche zwecks Bereitstellung eines Redundanzverfahrens in einem Normalfall über einen der Koppelports (P1, P2) dieses Kopplungselements (SW) keine in dem Kommunikationsnetzwerk übertragenen Telegramme weiterleitet. Eine der Kommunikationsverbindungen (KV) ist zwischen einem ersten und einem zweiten Kopplungselement (NK1, NK2) als kritische Strecke (KRIT) ausgebildet, welche andere, insbesondere schlechtere Übertragungseigenschaften als die übrigen Kommunikationsverbindungen (KV) aufweist. Die Redundanzmanagementfunktionalität (MRM) ist in dem ersten oder dem zweiten Kopplungselement (NK1, NK2) vorgesehen, welche in dem Normalfall standardisiert den mit der kritischen Strecke (KRIT) verbundenen Koppelport (P2) logisch abschaltet.

## Beschreibung

Die Erfindung betrifft ein Verfahren in einem Kommunikationsnetzwerk, das eine Mehrzahl an Kopplungselementen umfasst, welche jeweils zumindest einen ersten und einen zweiten Koppelport aufweisen. Die Kopplungselemente sind über Kommunikationsverbindungen physikalisch in Ringtopologie verschaltet, indem eine jeweilige Kommunikationsverbindung den ersten Koppelport eines Kopplungselements mit dem zweiten Koppelport eines anderen Kopplungselements verbindet. In einem der Kopplungselemente ist eine Redundanzmanagementfunktionalität implementiert, welche zwecks Bereitstellung eines Redundanzverfahrens in einem Normalfall über einen der Koppelports dieses Kopplungselements keine in dem Kommunikationsnetzwerk übertragenen Telegramme weiterleitet.

Ein bekanntes Redundanzverfahren beruht auf dem Media Redundancy Protocol (MRP). Dieses ist ein Protokoll für hochverfügbare Netzwerke, wie sie in kritischen Automatisierungsanwendungen benötigt werden. Die Verfügbarkeit der an die in Ringtopologie verschalteten Kopplungselemente angeschlossenen Komponenten wird durch das Vorsehen von Redundanz erhöht. Durch die in Ringtopologie verschalteten Kopplungselemente erlaubt es MRP, den Ausfall einer Kommunikationsverbindung oder eines Kopplungselements zu kompensieren. Die Kommunikationsverbindungen sind üblicherweise als drahtgebundene Kommunikationsverbindungen aufgebaut. Beispielsweise werden Twisted-Pair (TP)- oder Lichtwellenleiter (LWL)-Leitungen verwendet.

In der Ringstruktur gibt es zwei Wege/Pfade zwischen zwei beliebigen Teilnehmern, die an unterschiedliche Kopplungselemente angeschlossen sind. Im Falle des Datennetzstandards E-thernet ist dies so nicht zulässig. Deshalb wird eine Verbindung in dem Kommunikationsring auf der logischen Ebene abgeschaltet. Dies heißt, die Verkabelung ist ein Ring, logisch entspricht die Struktur jedoch einer Linie. Das logische Abschalten einer Verbindung erfolgt durch das Kopplungselement, das die Redundanzmanagementfunktionalität implementiert hat. Dieses Kopplungselement wird üblicherweise als Redundanzmanagementeinheit bezeichnet.

Die Redundanzmanagementeinheit überprüft durch Versenden sog. MRP-Testtelegramme an seinen beiden Koppelports, ob der Kommunikationsring geschlossesn ist oder offen ist. Der Kommunikationsring ist dann offen, wenn er durch einen Leitungsbruch einer Kommunikationsverbindung oder den Ausfall eines Kopplungselementes unterbrochen ist. Umgekehrt ist der Kommunikationsring geschlossen, wenn kein Leitungsbruch vorliegt und kein Kopplungselement ausgefallen ist.

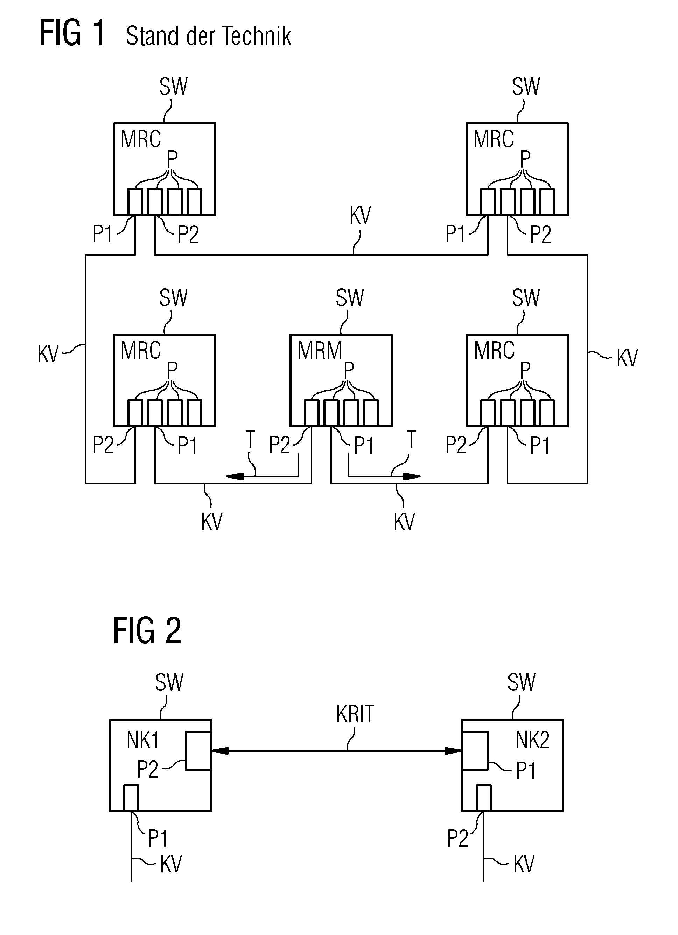

Diese Situation ist schematisch in Fig. 1 dargestellt. Lediglich beispielshaft weist das Kommunikationsnetzwerk fünf Kopplungselemente SW, z.B. Switches, auf. Jedes der Kopplungselemente SW umfasst lediglich beispielhaft vier Koppelports P. Die Kopplungselemente SW sind über Kommunikationsverbindungen KV in Ringtopologie miteinander verschaltet. Dabei ist eine Kommunikationsverbindung zwischen einem ersten Koppelport P1 eines Kopplungselementes SW und einem zweiten Koppelport P2 eines benachbarten Kopplungselements SW verschaltet. Das Kopplungselement SW, in welchem die Redundanzmanagementfunktionalität MRM implementiert ist, stellt die oben erwähnte Redundanzmanagementeinheit dar. Die übrigen Kopplungselemente SW stellen Clients (Media Redundancy Clients, MRC) dar.

Zur Überprüfung des Kommunikationsnetzwerks wird durch die Redundanzmanagementfunktionalität MRM detektiert, ob an dem ersten Koppelport P1 gesendete Testtelegramme T an dem zweiten Koppelport P2 empfangen werden, und umgekehrt. Ist dies der Fall, so ist der Kommunikationsring geschlossen. In diesem Fall blockiert die Redundanzmanagementfunktionalität MRM die Übertragung von Nutzdaten an einem seiner beiden Koppelports P1, P2 und stellt somit eine schleifenfreie Linientopologie her. Bleiben andererseits die an einem der beiden Koppelports P1, P2 gesendeten Testtelegramme T aus, so ist der Kommunikationsring geöffnet. In diesem Fall hebt die Redundanzmanagementfunktionalität MRM die Blockierung des Ringports auf und baut damit erneut eine ununterbrochene Linientopologie zwischen den verbleibenden Kopplungselementen, welche die MRM und die MRC implementiert haben, her.

Bei jedem der beschriebenen Umschaltvorgänge (schließen oder öffnen des Kommunikationsrings durch MRM) initiiert die Redundanzmanagementfunktionalität MRM einen Topologiewechsel. Dies erfolgt lokal und durch das Versenden sog. MRP Topology Change Telegrammen an die MRCs. Hierdurch werden die gelernten Zieladressen an deren Koppelports P1, P2 gelöscht. Hierdurch wird die Neuorganisation des Kommunikationsnetzes infolge des Umschaltvorganges beschleunigt.

In manchen Kommunikationsnetzwerken kann es erforderlich sein, eine Kommunikationsverbindungen KV einzusetzen, die von den üblicherweise verwendeten Twisted Pair- oder Lichtwellenleiter-Leitungen abweichende Eigenschaften im Hinblick auf die Datenübertragung besitzt. Die Datenübertragung bei Twisted-Pair- oder Lichtwellenleiter-Leitungen kann im Full-Duplex-Mode mit hoher Datenrate und geringen Übertragungsver-zögerungen erfolgen. Dies ist z.B. bei einer drahtlosen Kommunikationsverbindung als Ersatzstrecke nicht der Fall. Hiermit kann eine höhere Übertragungsverzögerung bei geringerem Datendurchsatz im Vergleich zu den anderen Kommunikationsverbindungen bestehen.

Die Topologie einer Ersatzstrecke (d.h. einer Kommunikationsverbindung, die gegenüber Twisted Pair- oder Lichtwellenleiter-Leitungen abweichende Eigenschaften besitzt) ist schematisch in Fig. 2 dargestellt. Die Kopplungselemente SW sind als erste und zweite Netzkomponente NK1, NK2 ausgebildet. Mit einem ihrer Ports KV (P1 von NK1, P2 von NK2) sind diese an eine herkömmliche Kommunikationsverbindung angeschlossen. Mit einem anderen Koppelport (P2 von NK1, P1 von NK2) ist die Ersatzstrecke KRIT gekopppelt. Diese kann bezüglich ihrer Übertragungseigenschaften bspw. äußeren Einflüssen unterworfen sein. Im Falle einer WLAN-Strecke können z.B. neu hinzugekommene WLAN-Teilnehmer oder Nicht-WLAN-Geräte, die in einem gemeinam genutzten Frequenzbereich kommunizieren, die Bandbreite für jeden Teilnehmer beeinflussen. Zudem ist es möglich, dass die maximale Datenrate der Strecke KRIT zumindest zeitweise unter der Datenrate der anderen Kommunikationsverbindungen KV liegt.

Aufgrund dessen sind Ersatzstrecke der oben beschriebenen Art in auf MRP basierenden Kommunikationsnetzen bislang nicht berücksichtigt. Der Betrieb einer solchen Strecke ist in der MRP-Norm nicht zugelassen. Es müsste deshalb auf alternative Kommunikationstechnologien, wie z.B. RSTP (Rapid Spanning Tree Protocol) oder Layer-3-Routing ausgewichen werden.

Es ist Aufgabe der vorliegenden Erfindung, ein Verfahren anzugeben, das die Einbindung einer Ersatzstrecke in ein Kommunikationsnetzwerk, das bevorzugt auf MRP basiert, erlaubt.

Diese Aufgaben werden gelöst durch ein Verfahren gemäß den Merkmalen des Patentanspruches 1 und 6, einem Kopplungselement gemäß den Merkmalen des Patentanspruches 16, einem Kopplungselement gemäß den Merkmalen des Patentanspruches 17 und ein Kommunikationsnetzwerk gemäß den Merkmalen des Patentanspruches 18. Vorteilhafte Ausgestaltungen ergeben sich aus den abhängigen Patentansprüchen.

Die Erfindung schafft gemäß einem ersten Aspekt ein Verfahren in einem Kommunikationsnetzwerk, das eine Mehrzahl an Kopplungselementen, welche jeweils zumindest einen ersten und einen zweiten Koppelport aufweisen, umfasst. Die Kopplungselemente sind über Kommunikationsverbindungen physikalisch in Ringtopologie verschaltet, indem eine jeweilige Kommunikationsverbindung den ersten Koppelport eines Kopplungselements mit dem zweiten Koppelport eines anderen Kopplungselements verbindet, wobei in einem der Kopplungselemente eine Redundanzmanagementfunktionalität implementiert ist. Die Redundanzmanagementfunktionalität leitet zwecks Bereitstellung eines Redundanzverfahrens, insbesondere des Media Redundancy Protocols (MRP), in einem Normalfall über einen der Koppelports dieses Kopplungselements keine in dem Kommunikationsnetzwerk übertragenen Telegramme weiter. Eine der Kommunikationsverbindungen des Kommunikationsnetzwerks ist zwischen einem ersten und einem zweiten Kopplungselement ist als kritische Strecke ausgebildet, welche andere, insbesondere schlechtere Übertragungseigenschaften als die übrigen Kommunikationsverbindungen aufweist. Die Redundanzmanagementfunktionalität wird in dem ersten oder dem zweiten Kopplungselement vorgesehen, welche in dem Normalfall standardisiert den mit der kritischen Strecke verbundenen Koppelport logisch abschaltet.

Die kritische Strecke ist eine Ersatzstrecke. Diese kann bspw. auf einer drahtlosen Kommunikation, wie z.B. WLAN (Wireless Local Area Network) basieren. Die kritische Strecke kann auch eine andere elektrische oder drahtlose WAN-Verbindung darstellen. Beispielsweise kann die kritische Strecke eine DSL-Verbindung oder eine HSDPA-Verbindung sein. Die Ersatzstrecke wird bspw. über Bridging- oder Routing-Technologie an die anderen Koppelports, welche nicht mit herkömmlichen Kommunikationsverbindungen verbunden sind, des ersten und zweiten Kopplungselements angebunden. Das erste und das zweite Kopplungselement stellen allgemein Netzkomponenten dar und können bspw. als Access Points ausgebildet sein.

Um das Redundanzverfahren, insbesondere MRP, in einem Kommunikationsnetzwerk mit einer solchen kritischen Strecke realisieren zu können, wird vorgeschlagen, die Kontrolle über die Redundanzmanagementfunktionalität über einen blockierten Koppelport in einem der Koppelelemente zu implementieren, welches an die kritische Strecke angebunden ist. Im Gegensatz zu der im MRP realisierten Redundanzmanagementfunktionalität ist hier eine statische Zuordnung der Rollen der Koppelports dieses oder dieser Koppelelemente vorgesehen.

Standardmäßig ist der Koppelport, der mit einer der herkömmlichen Kommunikationsverbindungen verbunden ist, aktiviert. Dieser stellt den sog. Primary Ringport dar, der die Weiterleitung von Telegrammen vornimmt. Der andere Koppelport, der mit der kritischen Strecke verbunden ist, stellt den sog. Secondary Ringport dar, der blockiert wird. Durch diese feste Zuordnung ist sichergestellt, dass im Falle einer ungestörten Ringkommunikation immer die überlegenen Eigenschaften der herkömmlichen Kommunikationsverbindung, in der Regel einer kabelgebundenen Strecke, genutzt werden. Die kritische Strecke wird demgegenüber nur im Fall einer Ringunterbrechung verwendet. Dieses Vorgehen ist vorteilhaft, wenn die kritische Strecke eine drahtlose Kommunikationsverbindung ist, mit deren Verwendung Kosten anfallen. Der Anteil kostenpflichtiger Datenübertragung kann mit dem vorgeschlagenen Vorgehen gering gehalten werden. Darüber hinaus kann eine größere Sicherheit erzielt werden, da die kritische Strecke häufiger kurzfristigen Störungen unterliegen könnte als die übrigen, herkömmlichen Kommunikationsverbindungen.

Gemäß einer Ausgestaltung des Verfahrens ist die Redundanzmanagementfunktionalität dazu ausgebildet, die kritische Strecke in einem Redundanzfall, in dem eine der Kommunikationsverbindungen oder eines der Kopplungselemente ausgefallen ist, zu aktivieren. Unter einem Redundanzfall wird der Störfall der Kommunikation in dem Kommunikationsnetzwerk verstanden. Diese Ausgestaltung bezweckt die Verwendung der kritischen Strecke ausschließlich dann, wenn eine der Kommunikationsverbindungen oder eines der Kopplungselemente in dem Kommunikatinsnetzwerk ausgefallen ist.

Eine weitere Ausgestaltung sieht vor, dass die Redundanzmanagementfunktionalität sowohl in dem ersten als auch in dem zweiten Kopplungselement implementiert ist und in dem Kopplungselement eine virtuelle, die Redundanzmanagementfunktionalität umfassende Redundanzmanagementeinheit ausbildet. Gemäß dieser Ausgestaltung kann dann die Überwachung der kritischen Strecke separat von der Überwachung des restlichen Kommunikationsringes durchgeführt werden. Die Überwachung der kritischen Strecke braucht in diesem Fall auch nicht unter Verwendung von Testtelegrammen erfolgen. Stattdessen können für die kritische Strecke angepasste Kriterien verwendet werden.

Wenn in der vorliegenden Beschreibung von einem Kommunikationsring die Rede ist, so besteht dieser aus sämtlichen Kopplungselementen und sämtlichen die Kopplungselemente in Ringtopologie verbindenden Kommunikationsverbindungen. Die Kommunikationsverbindungen umfassen dabei auch die kritische Strecke.

Da die Testtelegramme lediglich über die herkömmlichen Kommunikationsverbindungen übertragen werden, erhöht sich die Zuverlässigkeit von deren Übertragung. Damit werden bspw. Zustände vermieden, in denen die unzuverlässige Erkennung einer Verbindung zu kreisenden Testtelegrammen führt. Dadurch, dass keine Übertragung von Testtelegrammen über die kritische Strecke zu erfolgen braucht, erhöht sich die Datenrate, die für die Nutzdatenkommunikation zur Verfügung steht, in den herkömmlichen Kommunikationsverbindungen.

In einer weiteren Ausgestaltung des Verfahrens werden durch das erste und das zweite Kopplungselement unabhängig voneinander über ihre Koppelports, welche nicht mit der kritischen Strecke verbunden sind, Testtelegramme des Redundanzverfahrens ausgesendet und/oder empfangen und ausgewertet. Dies hat zur Folge, dass sich die virtuelle Redundanzmanagementeinheit nach außen wie ein herkömmliches Kopplungselement verhält, einschließlich der in MRP üblichen dynamischen Zuweisung der Rollen der Koppelports.

Zweckmäßigerweise tauschen das erste und das zweite Kopplungselement über die kritische Strecke Zustandsinformationen aus, welche das Aussenden und/oder den Empfang der Testtelegramme betreffen.

Gemäß einem zweiten Aspekt schafft die Erfindung ein Verfahren in einem Kommunikationsnetzwerk, das eine Mehrzahl an Kopplungselementen umfasst, welche jeweils zumindest einen ersten und einen zweiten Koppelport aufweisen. Die Kopplungselemente sind über Kommunikationsverbindungen physikalisch in Ringtopologie verschaltet, indem eine jeweilige Kommunikationsverbindung den ersten Koppelport eines Kopplungselements mit dem zweiten Koppelport eines anderen Kopplungselements verbindet, wobei in einem der Kopplungselemente eine Redundanzmanagementfunktionalität implementiert ist, welche zwecks Bereitstellung eines Redundanzverfahrens in einem Normalfall über einen der Koppelports dieses Kopplungselements keine in dem Kommunikationsnetzwerk übertragenen Telegramme weiterleitet. Eine der Kommunikationsverbindungen zwischen einem ersten und einem zweiten Kopplungselement ist als kritische Strecke ausgebildet, welche andere, insbesondere schlechtere Übertragungseigenschaften als die übrigen Kommunikationsverbindungen aufweist. Die kritische Strecke wird nach der Durchführung einer Prüfung bzgl. ihrer Verbindungseigenschaften nach zumindest einem vorgegebenen Kriterium einer ersten oder einer zweiten Zustandskategorie zugeordnet, wobei bei einer Zuordnung der kritischen Strecke in die erste Zustandskategorie die Übertragung von Telegrammen über die kritische Strecke durch das erste und/oder das zweite Kopplungselement unterbunden wird.

Durch diese Ausgestaltung des Verfahrens kann eine optimale Funktion des eine kritische Strecke umfassenden Kommunikationsnetzwerks sichergestellt werden, indem ein idealisiertes Verhalten der kritischen Strecke "simuliert" wird. Bei idealisierten Verbindungsstrecken soll im ungestörten Zustand eine Strecke sowohl Nutzdaten als auch Testtelegramme ohne Verluste übertragen. Demgegenüber soll im gestörten Zustand idealerweise eine vollständige Unterbrechung vorliegen, die sämtliche Kommunikation unterbindet.

In einem auf MRP basierenden Kommunikationsring kann eine solche kritische Strecke prinzipiell zu Problemen führen. MRP erkennt erst nach Verlust von drei aufeinanderfolgenden Testtelegrammen eine Verbindungsunterbrechung. Damit ist es möglich, dass sich der Durchsatz der Strecke bereits auf einen inakzeptablen Wert verringert hat, ohne dass MRP dies als Unterbrechung des Kommunikatinsringes erkennt. Im umgekehrten Fall müssen beim Aufbau einer Kommunikationsverbindung drei aufeinanderfolgende Testtelegramme empfangen werden. Nur dann erkennt die Redundanzmanagementfunktionalität von MRP eine Kommunikationsverbindung und schließt den Ring. Wird trotz einer bestehenden Verbindung, aber einer im Vergleich zu herkömmlichen Kommunikationsverbindungen schlechtere Übertragungseigenschaften aufweisenden kritischen Strecke, nicht die erforderliche Anzahl an Testtelegrammen empfangen, so trennt die Redundanzmanagementfunktionalität den Kommunikationsring nicht auf, was zu kreisenden Telegrammen führen kann.

Durch die hier vorgeschlagene Ausgestaltung wird eine lokale Überprüfung der kritischen Strecke, insbesondere durch die, durch die kritische Strecke verbundenen, Kopplungselemente vorgenommen. Die Prüfung der kritischen Strecke hat bspw. eine "gut"/"schlecht"- oder "0"/ "1"-Entscheidung zur Folge. Hierfür geeignete Schwellen können bspw. durch eine Konfiguration variabel definiert werden. Die Zuordnung zu einer Zustandskategorie kann bspw. auch der Gestalt erfolgen, dass eine Abweichung eines überprüften Kriteriums von einem Ausgangswert, der bspw. beim Zeitpunkt der Inbetriebnahme der kritischen Strecke von den beteiligten Kopplungselementen ermittelt wurde, durchgeführt wird.

Ein Vorteil dieses Vorgehens besteht darin, dass bei einer als "schlecht" eingestuften kritischen Strecke sowohl die Übertragung von Testtelegrammen als auch die Nutzdatenkommunikation unterbrochen werden kann. Hierdurch entstehen bei einer "schlechten" kritischen Verbindung keine kreisenden Telegramme. Das Verhalten der kritischen Strecke wird dem idealisierten Verhalten einer kabelgebundenen Kommunikationsverbindung angenähert. Dies bedeutet, entweder werden überhaupt keine Telegramme übertragen. Oder aber es werden sowohl Testtelegramme als auch Nutzdaten zuverlässig übertragen.

Es wird weiterhin sichergestellt, dass bei aktiver Redundanzmanagementeinheit keine Unterbrechung einer als "schlecht" eingestuften kritischen Strecke besteht. Hierdurch kann in einem Redundanzfall die maximal zur Verfügung stehende Bandbreite genutzt werden. Dies gilt selbst dann, wenn die kritische Strecke nicht die gewünschte Qualität im Verglech zu einer herkömmlichen Kommunikationsverbindung aufweist.

Wird die kritische Strecke der zweiten Zustandskategorie (diese entspricht einer "gut"-Entscheidung), so werden alle Telegramme über die kritische Strecke normal übertragen. Wird die kritische Strecke hingegen in die erste Zustandskategorie ("schlecht"-Entscheidung) eingeordnet, so wird ein Fehlerzustand eingenommen. Die Übertragung von Telegrammen über die kritische Strecke wird dann durch das erste und/oder das zweite Kopplungselement blockiert. Dies hat zur Folge, dass das die Redundanzmanagementfunktionalität aufweisende Kopplungselement, d.h. die Redundanzmanagementeinheit, keine Testtelegramme mehr empfängt und daraufhin die kritische Strecke durch eine in dem Kommunikationsring vorhandene redundante Strecke "ersetzt". Das "Ersetzen" der kritischen Strecke hat zur Folge, dass die Redundanzmanagementeinheit einen von ihr blockierten Koppelport aktiviert, woraufhin die eingangs bereits beschriebene Neuorganisation des Kommunikationsnetzwerks erfolgt.

Es kann weiterhin vorgesehen sein, dass die kritische Strecke unabhängig von ihrer gegenwärtigen Zustandskategorie bzgl. ihrer Verbindungseigenschaften überprüft wird, wobei bei einem Wechsel von der ersten Zustandskategorie zu der zweiten Zustandskategorie eine Übertragung von Telegrammen über die kritische Strecke wieder zugelassen wird. Die wieder aktive, kritische Strecke wird durch die Redundanzmanagementeinheit detektiert, da nun von dieser über den ersten Koppelport auch wieder am zweiten Koppelport ausgesendete Testtelegramme empfangen werden, und umgekehrt. Dies hat zur Folge, dass einer der Koppelports der Redundanzmanagementeinheit wieder inaktiv geschaltet wird.

Es ist vorteilhaft, wenn ein Wechsel von der ersten Zustandskategorie zu der zweiten Zustandskategorie, und umgekehrt, mit einer Hysterese erfolgt. Hierdurch kann ein schnelles Hin- und Herschalten der Zustandskategorien vermieden werden.

Es kann weiterhin vorgesehen sein, dass bei einer der ersten Zustandskategorie zugeordneten kritischen Strecke die Übertragung von Telegrammen über die kritische Strecke durch das erste und/oder das zweite Kopplungselement nur dann unterbunden (blockiert) wird, wenn der Kommunikationsring an keiner anderen Stelle unterbrochen ist.

Hierdurch wird sichergestellt, dass durch die Blockierung der kritischen Strecke keine zusätzliche Ringunterbrechung verursacht wird und die, ggf. auch nur geringe, Datenrate der gestörten kritischen Strecke genutzt werden kann.

Ob der Kommunikationsring unterbrochen und die Redundanzmanagementfunktionalität aktiv ist, können die beiden zur kritischen Strecke gehörenden erste und zweite Kopplungselemente selbstständig ermitteln, indem sie jeweils über den Koppelport, der nicht zu der kritischen Strecke gehört, kontinuierlich Statustelegramme austauschen. Werden diese von der Redundanzmanagementeinheit weitergeleitet, so ist die Redundanzmanagementfunktionalität aktiv. Der Kommunikationsring ist dann unterbrochen. Ist der kritischen Strecke die erste Zustandskategorie zugeordnet, kann vorgesehen sein, einen Alarm an einen Zentralrechner zu übermitteln, sodass Gegenmaßnahmen zur Wiederherstellung der Qualität der kritischen Strecke eingeleitet werden können. Bei einer WLAN-Verbindung können diese bspw. in der Ermittlung von Störern, dem Wechsel des Funkkanals etc. bestehen. Zudem bekommt ein Anwender durch eine aktiv werdende Redundanzmanagementeinheit eine Information, dass in dem Kommunikationsring ein Problem besteht.

In einer weiteren Ausgestaltung der beiden beschriebenen Verfahren wird eine lokale Prüfung und/oder Überwachung der kritischen Strecke mit an die kritische Strecke angepassten Kriterien durch das erste und das zweite Kopplungselement durchgeführt. Die Prüfung der kritischen Strecke kann individuell auf deren Eigenschaften zugeschnitten werden. Dies bedeutet, für die Prüfung können Kriterien genutzt werden, die spezifisch für die verwendete Technologie der kritischen Strecke sind. Diese Kriterien können bspw. physikalische Übertragungseigenschaften, einen Signal-Rausch-Abstand (Signal Noise Ratio, SNR), einen möglichen Datendurchsatz, eine Verfügbarkeit, bei einer WLAN-Verbindung die maximale Zugriffszeit auf das Medium, usw. umfassen. Weiterhin können Kriterien genutzt werden, die an bestimmte Leistungsdaten der Kommunikationsverbindung angepasst sind oder auf eine Abweichung von einem Sollwert basieren. Wenn eine auf einer drahtlosen Kommunikationstechnologie basierende kritische Strecke bspw. aufgrund technischer Einschränkungen nur mit einem geringen Datendurchsatz realisiert werden kann, ist es zweckmäßig, diese Strecke nach anderen Kriterien zu beurteilen, als eine ebenfalls auf drahtloser Technologie basierende kritische Strecke, die unter optimalen Bedingungen arbeiten kann.

In der ersten Ausgestaltung des Verfahrens kann dies vorteilhaft zur Realisierung einer virtuellen Redundanzmanagementeinheit eingesetzt werden, sodass auf eine Überprüfung der kritischen Strecke auf Testtelegramme des Redundanzverfahrens verzichtet werden kann. In der zweiten Variante kann dadurch der Nachteil umgangen werden, dass bspw. eine unzureichende Erkennung der Qualität einer Verbindung oder der Entstehung von kreisenden Telegrammen entgegengewirkt werden kann. Die an die kritische Strecke angepassten Kriterien werden derart gewählt, dass die Eignung der Strecke für eine Datenübertragung, insbesondere von Nutzdaten, sicher beurteilt werden kann.

Wie einleitend bereits beschrieben, kann die kritische Strecke eine (deutlich) geringe verfügbare Bandbreite als die herkömmlichen, üblichen Kommunikationsverbindungen aufweisen. Die kritische Strecke stellt somit einen Flaschenhals für die Übertragung von Daten dar. Dies kann zur Konsequenz haben, dass ein erstes oder zweites Kopplungselement Telegramme verwerfen muss, die dieser über seinen Koppelport empfängt, der mit einer herkömmlichen Kommunikationsverbindung gekoppelt ist.

Hierdurch kann das Problem auftreten, dass auch Protokolltelegramme des Redundanzverfahrens verworfen werden können. Beispielsweise verschlechtert sich eine Rekonfigurationszeit des Kommunikationsrings in einem Fehlerfall, wenn sog. "Topology Change"-Telegramme verloren gehen. Ebenso können beim Schließen des Kommunikationsringes Testtelegramme verloren gehen. Dies führt dazu, dass der Ring von der Redundanzmanagementfunktionalität nicht mehr als geschlossen erkannt wird, obwohl Telegramme bereits im Kommunikationsring übertragen werden.

Gemäß einer weiteren Ausgestaltung werden Nachbar-Kopplungselemente, die über Kommunikationsverbindungen unmittelbar mit dem ersten und dem zweiten Kopplungselement verbunden sind, derart konfiguriert, dass eine Datenrate des von ihnen ausgesandten Datenstroms gerade so bemessen ist, dass der über die kritische Strecke geführte Datenstrom von dem ersten und dem zweiten Kopplungselement verlustfrei weiter verarbeitet werden kann. Mit anderen Worten bedeutet dies, dass die ausgehende Datenrate der Nachbar-Kopplungselemente an die Datenrate des ersten und/oder des zweiten Kopplungselements angepasst wird. Dies ermöglicht den Einsatz solcher erster und zweiter Kopplungselemente, die keine priorisierte Weiterleitung von Telegrammen unterstützen.

Es ist dabei vorgesehen, dass Test- und/oder Protokolltelegramme des Redundanzverfahrens von den Nachbar-Kopplungselementen hochprior gegenüber Nutzdaten umfassenden Telegrammen an das erste und das zweite Kopplungselement weitergeleitet werden. Wenn aufgrund der unterschiedlichen Datenraten von kritischer Strecke und herkömmlichen Kommunikationsverbindungen Telegramme verworfen werden müssen, dann darf es sich hierbei nicht um Test- und/oder Protokolldiagramme handeln.

Es ist in diesem Zusammenhang zweckmäßig, wenn die Nachbar-Kopplungselemente in einer wie oben beschriebenen Weise konfiguriert werden können. Eine solche Konfiguration kann wahlweise durch einen Anwender oder ein automatisiertes Verfahren erfolgen, bei dem sich das erste und/oder zweite Kopplungselement mit ihren Nachbar-Kopplungselementen über Aktivierung und Konfiguration des Verfahrens verständigen. Der Vorteil hierbei ist, dass das erste und/oder zweite Kopplungselement zunächst die mögliche Datenrate über die kritische Strecke ermitteln können. Im zweiten Schritt kann dann die Anpassung der Datenrate in den Nachbar-Kopplungselementen auf die ermittelte, maximal mögliche Datenrate der kritischen Strecke erfolgen.

Die eingangs beschriebene Problematik des "Flaschenhalses" der kritischen Strecke hinsichtlich Performanz wird damit nicht ausschließlich in den an die kritische Strecke angeschlossenen ersten und/oder zweiten Kopplungselementen gelöst. Stattdessen wird die Fähigkeit der anderen Kopplungselemente zur Priorisierung genutzt. Von Vorteil ist, dass damit die Einbindung einer kritischen Strecke mit geringeren Datenübertragungsfähigkeiten in ein Kommunikationsnetzwerk möglich ist, welches bspw. auf MRP als Redundanzverfahren basiert, obwohl die verwendeten Kopplungselemente für die Bereitstellung der kritischen Strecke keine ausreichende Funktionalität für diesen Anwendungsfall bieten.

Gemäß einer weiteren Ausgestaltung des erfindungsgemäßen Verfahrens umfasst die kritische Strecke zwei voneinander unabhängige Datenübertragungskanäle, insbesondere unterschiedliche Übertragungsmechanismen, über die gleichzeitig zumindest die Testtelegramme des Redundanzverfahrens redundant übertragen werden. Die mit der kritischen Strecke verbundenen Kopplungselemente können bspw. als Dual Band-Access Points ausgebildet sein, die als Wireless Distribution System (WDS) betrieben werden. Dual Band-Access Points verfügen über mindestens zwei Funkmodule, die jeweils in mindestens zwei verschiedenen Frequenzbändern arbeiten können. Beispielsweise können Frequenzbänder bei 2,4 GHz und 5 GHz verwendet werden. Derartige Kopplungselemente können dann gleichzeitig in den beiden Bändern arbeiten.

Gemäß dieser Ausgestaltung werden zumindest die Testtelegramme des Redundanzverfahrens redundant versendet. Beispielsweise können Testtelegramme im sendenden Kopplungselement dupliziert und über beide Funkkanäle gesendet werden. Im empfangenen Kopplungselement wird dann vorzugsweise die erste empfangene Kopie des Testtelegramms weitergeleitet und später eintreffende Kopien werden verworfen.

Nutzdatentelegramme brauchen nicht grundsätzlich dupliziert zu werden, sondern können über einen der Datenübertragungskanäle übertragen werden. Grundsätzlich ist jedoch auch eine duplizierte Übertragung von Nutzdaten über die zwei voneinander unabhängigen Datenübertragungskanälen möglich. Eine Verarbeitung kann in entsprechender Weise zu den Testtelegrammen erfolgen. Die Nutzdatentelegramme könnten ohne Duplikation auch auf den zwei voneinander unabhängigen Datenübertragungskanälen verteilt übertragen werden. Hierdurch wird die Übertragungsbandbreite aller dafür genutzen Datenübertragungskanäle gebündelt. In Abwandlung der beschriebenen Ausgestaltung kann die kritische Strecke auch durch mehr als zwei voneinander unabhängige Datenübertragungskanäle ausgebildet werden.

Weiterhin kann vorgesehen sein, dass die Datenübertragungskanäle in unterschiedlichen Frequenzbändern liegen. Arbeitet ein Funkmodul mit mehreren Streams, kann auch pro Stream ein Duplikat übertragen werden.

Durch die redundante Übertragung zumindest der Testtelegramme über zwei oder mehrere Sendemodule eines Kopplungselements auf unterschiedlichen Kanälen oder Frequenzbändern kann die Robustheit der Übertragung der Testtelegramme über die unter Umständen fehleranfällige kritische Strecke erhöht werden. Hierdurch gehen beim Aufbau des Kommunikationsringes idealerweise keine Testtelegramme verloren. Das Entstehen von kreisenden Telegrammen kann ebenfalls vermieden werden.

Durch die additive redundante Übertragung der Nutzdaten wird auch die Robustheit der Nutzdatenübertragung erhöht und die verfügbare Bandbreite aller Funkmodule genutzt. Als Ergebnis wird das Verhalten der kritischen Strecke dem idealisierten Verhalten einer kabelgebundenen Strecke angenähert. Dies bedeutet, es werden entweder keine Telegramme übertragen oder zuverlässig sowohl Testtelegramme als auch Nutzdatentelegramme.

Werden die Nutzdaten auf mehrere vorhandene Sendemodule/- einheiten verteilt, so steht für deren Übertragung eine gebündelte Übertragungsbandbreite der einzelnen Sendeeinheiten und damit eine erhöhte Nutzdatenrate zur Verfügung. Damit kann die Nutzdatenrate der kritischen Strecke an die herkömmlichen Kommunikationsverbindungen angenähert oder angeglichen werden. Damit kann z.B. eine drahtlose Kommunikationsverbindung innerhalb eines Kommunikationsringes mit Gigabit-Ethernet-Kommunikationsverbindungen kombiniert werden.

Gemäß einer weiteren Ausgestaltung wird die Wahrscheinlichkeit der Übertragung von Testtelegrammen über die kritische Strecke dadurch erhöht, indem die Übertragung eines oder mehrerer Protokollparameter des Übertragungsverfahrens der kritischen Strecke adaptiert werden. Dies bezweckt, Testtelegramme auch bei schlechter Verbindung zu übertagen. Beispielsweise kann hierzu die Anzahl der Wiederholungen für Testtelegramme bei fehlerhafter Übertragung erhöht werden. Bei CSMA/CA kann eine kürzere Backoff-Zeit für Testtelegramme festgelegt werden. Ebenso ist es bspw. möglich, Testtelegramme mit niedrigerer Datenrate zu übertragen.

Die Erfindung schafft gemäß einem dritten Aspekt ein Kopplungselement für eine kritische Strecke in einem Kommunikationsnetzwerk, wobei das Kommunikationsnetzwerk folgendes umfasst: eine Mehrzahl an Kopplungselementen, welche jeweils zumindest einen ersten und einen zweiten Koppelport aufweisen, wobei die Kopplungselemente über Kommunikationsverbindungen physikalisch in Ringtopologie verschaltet sind, indem eine jeweilige Kommunikationsverbindung den ersten Koppelport eines Kopplungselements mit dem zweiten Koppelport eines anderen Kopplungselements verbindet, wobei in einem der Kopplungselemente eine Redundanzmanagementfunktionalität implementiert ist, welche zwecks Bereitstellung eines Redundanzverfahrens in einem Normalfall über einen der Koppelports dieses Kopplungselements keine in dem Kommunikationsnetzwerk übertragenen Telegramme weiterleitet. Eine der Kommunikationsverbindungen zwischen einem ersten und einem zweiten Kopplungselement ist als kritische Strecke ausgebildet, welche andere, insbesondere schlechtere Übertragungseigenschaften als die übrigen Kommunikationsverbindungen aufweist. Erfindungsgemäß ist die in dem ersten oder dem zweiten Kopplungselement vorgesehene Redundanzmanagementfunktionalität dazu ausgebildet, in dem Normalfall standardisiert den mit der kritischen Strecke verbundenen Koppelport logisch abzuschalten.

Die Erfindung verschafft gemäß einem vierten Aspekt der Erfindung ein Kopplungselement für ein Kommunikationsnetzwerk, wobei das Kommunikationsnetzwerk folgendes umfasst: eine Mehrzahl an Kopplungselementen, welche jeweils zumindest einen ersten und einen zweiten Koppelport aufweisen, wobei die Kopplungselemente über Kommunikationsverbindungen physikalisch in Ringtopologie verschaltet sind, indem eine jeweilige Kommunikationsverbindung den ersten Koppelport eines Kopplungselements mit dem zweiten Koppelport eines anderen Kopplungselements verbindet, wobei in einem der Kopplungselemente eine Redundanzmanagementfunktionalität implementiert ist, welche zwecks Bereitstellung eines Redundanzverfahrens in einem Normalfall über einen der Koppelports dieses Kopplungselements keine in dem Kommunikationsnetzwerk übertragenen Telegramme weiterleitet. Eine der Kommunikationsverbindungen zwischen einem ersten und einem zweiten Kopplungselement ist als kritische Strecke ausgebildet, welche andere, insbesondere schlechtere Übertragungseigenschaften als die übrigen Kommunikationsverbindungen aufweist. Das Kopplungselement umfasst Mittel zum Verarbeiten von Verbindungseigenschaften, welche die kritische Strecke nach der Durchführung einer Prüfung bzgl. ihrer Verbindungseigenschaften nach zumindest einem vorgegebenen Kriterium einer ersten oder einer zweiten Zustandskategorie zuordnen und bei einer Zuordnung der kritischen Strecke in die erste Zustandskategorie die Übertragung von Telegrammen über die kritische Strecke durch das erste und/oder das zweite Kopplungselement unterbinden.

Die Erfindung schafft ferner ein Kommunikationsnetzwerk umfassend eine Mehrzahl an Kopplungselementen, welche jeweils zumindest einen ersten und einen zweiten Koppelport aufweisen, wobei die Kopplungselemente über Kommunikationsverbindungen physikalisch in Ringtopologie verschaltet sind, indem eine jeweilige Kommunikationsverbindung den ersten Koppelport eines Kopplungselements mit dem zweiten Koppelport eines anderen Kopplungselements verbindet, wobei in einem der Kopplungselemente eine Redundanzmanagementfunktionalität implementiert ist, welche zwecks Bereitstellung eines Redundanzverfahrens in einem Normalfall über einen der Koppelports dieses Kopplungselements keine in dem Kommunikationsnetzwerk übertragenen Diagramme weiterleitet. Eine der Kommunikationsverbindungen zwischen einem ersten und einem zweiten Kopplungselement ist als kritische Strecke ausgebildet, welche andere, insbesondere schlechtere Übertragungseigenschaften als die übrigen Kommunikationsverbindungen aufweist. Das erfindungsgemäße Kommunikationsnetzwerk umfasst zumindest ein Kopplungselement der oben beschriebenen Art.

Die erfindungsgemäßen Kopplungselemente sowie das erfindungsgemäße Kommunikationsnetzwerk können darüber hinaus weitere Mittel zur Durchführung der erfindungsgemäßen Verfahren umfassen.

Die Erfindung wird nachfolgend näher anhand von Ausführungsbeispielen beschrieben. Es zeigen:
- Fig. 1: eine schematische Darstellung eines in Ringtopologie realisierten Kommunikationsnetzwerks, das das bekannte Media Redundancy Protocol (MRP) als Redundanzverfahren nutzt,
- Fig. 2: eine schematische Darstellung der Ausbildung einer Kommunikationsverbindung als kritische Strecke,
- Fig. 3: ein erfindungsgemäßes Kommunikationsnetzwerk mit einer als kritische Strecke ausgebildeten Kommunikationsverbindung,
- Fig. 4: ein erfindungsgemäßes Kommunikationsnetzwerk, in dem die kritische Strecke als Standby-Strecke genutzt wird,
- Fig. 5: ein erfindungsgemäßes Kommunikationsnetzwerk mit einer virtuellen Redundanzmanagementeinheit,
- Fig. 6: eine schematische Darstellung eines Kommunikationsnetzwerks, indem die auf jeder Kommunikationsverbindung auftretenden Datenrate dargestellt sind, und
- Fig. 7: eine schematische Darstellung des erfindungsgemäßen Kommunikationsnetzwerks, indem eine Anpassung der Datenraten erfolgt, wenn eine der Kommunikationsverbindungen als kritische Strecke ausgebildet ist.

Fig. 1 zeigt ein einleitend bereits beschriebenes Kommunikationsnetzwerk, das beispielhaft fünf Kopplungselemente SW umfasst, welche in Ringtopologie über Kommunikationsverbindungen KV miteinander verbunden sind. Die Kommunikationsverbindungen sind kabelgebunden als Twisted Pair (TP)- oder Lichtwellenleiter (LWL)-Leitungen ausgebildet. Eine jeweilige Kommunikationsverbindung KV ist zwischen einem ersten Koppelport P1 eines Kopplungselementes SW und einem zweiten Koppelport P2 eines anderen, benachbarten Kopplungselements SW verschaltet. Lediglich beispielhaft weist jedes der Kopplungselemente SW vier Koppelports P auf. In der Praxis kann die Anzahl an Koppelports beliebig sein, sofern zumindest der erste und der zweite Koppelport P1, P2 vorgesehen werden. Bezüglich des in dem Kommunikationsnetzwerk ausgeführten Redundanzverfahrens, das auf dem Media Redundancy Protocol (MRP) beruht, wird auf die in der Beschreibungseinleitung dargelegte Offenbarung verwiesen.

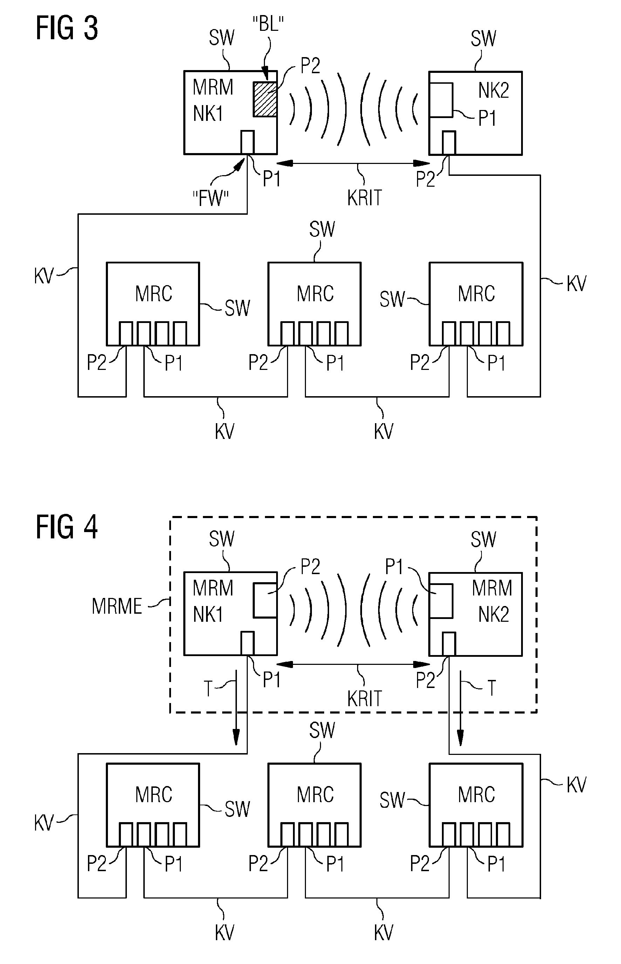

In dem in Fig. 3 dargestellten erfindungsgemäßen Kommunikationsnetzwerk ist eine der Kommunikationsverbindungen KV des Kommunikationsnetzwerks in Fig. 1 durch eine kritische Strecke KRIT ausgebildet. Die durch die kritische Strecke KRIT verbundenen Kopplungselemente SW stellen allgemein Netzkomponenten NK1, NK2 dar. Diese können bspw. durch Access Points gebildet sein. Wie in der schematischen Darstellung illustriert, kann die kritische Strecke KRIT auf einem drahtlosen Datenübertragungsverfahren, wie z.B. WLAN beruhen. Die kritische Strecke könnte jedoch auch durch eine DSL oder HSDPA-Kommunikationsverbindung gebildet sein.

Um die kritische Strecke KRIT in dem Kommunikationsring (MRP-Ring) als Standby-Strecke nutzen zu können, die im Redundanzfall zur Nutzdatenkommunikation verwendet wird, wird eine Redundanzmanagementfunktionalität MRM des Kommunikationsnetzwerks in einem der beiden Netzkomponenten NK1, NK2 implementiert (hier in NK1). Die Redundanzmanagementfunktionalität MRM übernimmt damit die Kontrolle darüber, welcher der beiden Ports P1, P2 der Netzkomponente NK1 blockiert wird. Erfindungsgemäß ist vorgesehen, im ungestörten Grundzustand des MRP-Ringes, in dem dieser geschlossen ist, den mit einer herkömmlichen Kommunikationsverbindung KV verbundenen Koppelport P1 als weiterleitenden Koppelport FW und den mit der kritischen Strecke KRIT gekoppelten Koppelport P2 als blockierenden Koppelport BL zu betreiben. Im Gegensatz zur MRP-Norm wird somit eine statische Zuordnung der beiden Koppelports der die Redundanzmanagementfunktionalität MRM aufweisenden Netzkomponente, hier NK1, vorgenommen. Der erste Koppelport P1 mit LinkUp wird zum sog. Primary Ringport (weiterleitende, oder Forwarding Port SW), der zweite Koppelport P2 zum sog. Secondary Ringport, welcher die Weiterleitung von Telegrammen blockiert (= BlockingPort BL).

Fällt nun bspw. der erste Koppelport P1 der Netzkomponente NK1 aus oder liegt eine anderweitige Störung der Netzkomponente NK1 vor, dann tauschen die beiden Koppelports P1, P2 der Netzkomponente NK2 ihre Rollen. Damit würde der zweite Koppelport P2 zum Primary Ringport FW und der erste Koppelport P1 zum Secondary Ringport BL.

Die vorgeschlagene Vorgehensweise hat zur Folge, dass die kritische Strecke KRIT in dem MRP-Ring nur in einem Störfall genutzt wird. Durch eine feste Zuordnung der Zustände "Forwarding" zu dem Koppelport, welcher mit einer herkömmlichen Kommunikationsverbindung KV verbunden ist, und "Blocking" zu dem Koppelport, der mit der kritischen Strecke KRIT gekoppelt ist, wird sichergestellt, dass im Fall des ungestörten MRP-Ringes immer die besseren Übertragungseigenschaften der herkömmlichen Kommunikationsverbindungen genutzt werden können. Die kritische Strecke wird nur im Fall einer Ringunterbrechung zum Einsatz kommen.

Eine Abwandlung des eben beschriebenen Prinzips ist in einem weiteren Ausführungsbeispiel gemäß Fig. 4 beschrieben. In dieser Ausgestaltungsvariante werden die Netzkomponenten NK1, NK2, welche mit der kritischen Strecke KRIT gekoppelt sind bzw. diese aufbauen, als virtuelle Redundanzmanagementeinheit MRME modelliert, wobei beide Netzkomponenten NK1, NK2 jeweils über die Redundanzmanagementfunktionalität MRM verfügen. Hierdurch kann die Überwachung der kritischen Strecke KRIT unabhängig von der Überwachung der übrigen Kommunikationsverbindungen KV des MRP-Ringes durchgeführt werden. Insbesondere ist die Verwendung der zur Prüfung des MRP-Ringes verwendeten Testtelegramme nicht erforderlich. Stattdessen können an die kritische Strecke KRIT angepasste spezifische Kriterien zur Überwachung der Strecke verwendet werden. Im Falle einer drahtlosen Kommunikationsverbindung mittels WLAN könnte bspw. der erreichbare Signal-Rausch-Abstand überprüft werden. Ebenso kann ein möglicher Datendurchsatz oder die Verfügbarkeit des Mediums als Kriterium für die Verfügbarkeit der Strecke herangezogen werden.

Diese Vorgehensweise weist eine Reihe von Vorteilen auf, da die MRP-Testtelegramme nur über die herkömmlichen Kommunikationsverbindungen, in der Regel kabelgebundene Verbindungen, übertragen werden. Hierdurch erhöht sich die Zuverlässigkeit von deren Übertragung. Weiter werden Zustände vermieden, in denen die unzuverlässige Erkennung einer Verbindung zu kreisenden Telegrammen führt. Da keine Übertragung von MRP-Testtelegrammen über die kritische Strecke KRIT erforderlich ist, erhöht sich die Datenrate, die für Nutzdatenkommunikation zur Verfügung steht.

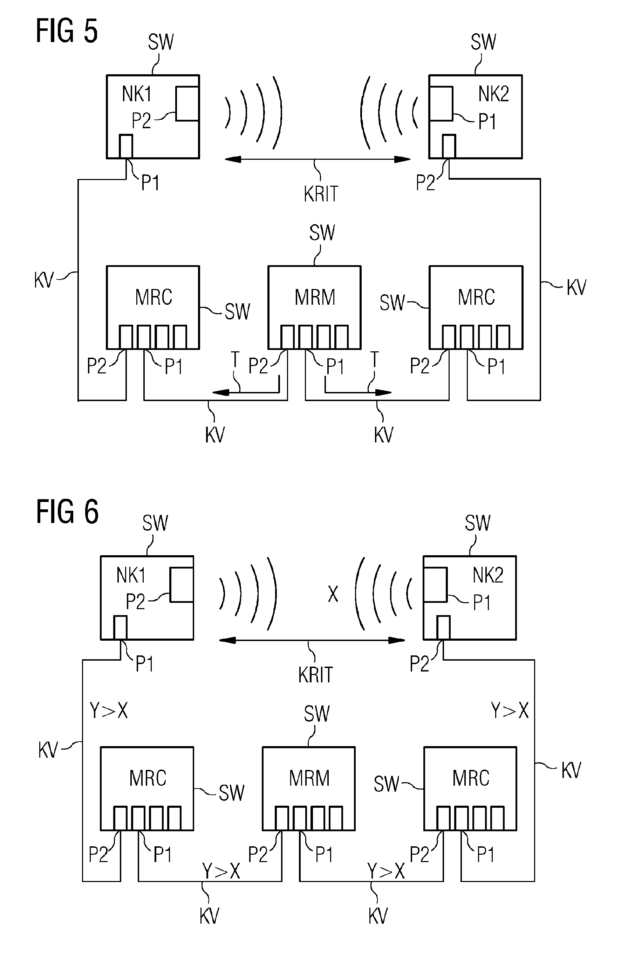

In dem in Fig. 5 gezeigten Ausführungsbeispiel ist die Redundanzmanagementfunktionalität MRM nicht in einer der Netzkomponenten NK1, NK2, welche mit der kritischen Strecke KRIT gekoppelt sind, implementiert. Stattdessen ist die Redundanzmanagementfunktionalität MRM in einem der anderen Kopplungselemente SW vorgesehen. Um in dieser Ausgestaltung die kritische Strecke, welche ggf. schlechtere Übertragungseigenschaften als die anderen Kommunikationsverbindungen KV aufweist, in den MRP-Ring integrieren zu können, ist vorgesehen, eine lokale Überprüfung der kritischen Strecke KRIT vorzunehmen. Diese Prüfung erfolgt mit spezifischen Kriterien, welche an die Übertragungstechnologie der kritischen Strecke KRIT angepasst sind. Im Falle einer drahtlosen Kommunikationsverbindung, die auf WLAN basiert, sind dies ein möglicher Datendurchsatz, die Verfügbarkeit des Mediums, ein Signal-Rausch-Abstand, eine maximale Zugriffszeit auf das Medium, usw.

Die Schwellen der für die Prüfung der kritischen Strecke herangezogenen spezifischen Kriterien können bspw. durch einen Administrator des Kommunikationsnetzwerks durch Konfiguration vorgegeben werden. Ebenfalls kann vorgesehen sein, der kritischen Strecke KRIT die Zustandskategorie "schlecht" zuzuordnen, wenn eine Abweichung von einem Ausgangswert für das angewandte spezifische Kriterium festgestellt wurde, wobei der Ausgangswert zum Zeitpunkt der Inbetriebnahme der kritischen Strecke von den Netzkomponenten NK1, NK2 festgestellt wird.

Es können auch Kriterien genutzt werden, die an bestimmte Leistungsdaten der kritischen Strecke angepasst sind oder auf einer Abweichung von einem Sollwert basieren. Dies ist bspw. dann sinnvoll, wenn eine Funkstrecke aufgrund technischer Einschränkungen nur mit geringem Datendurchsatz realisiert werden kann. Eine derartige Strecke ist nach anderen Kriterien zu beurteilen als eine Funkverbindung, die unter optimalen Bedingungen arbeiten kann.

Das Ergebnis der Prüfung der kritischen Strecke, welche durch die Netzkomponente NK1 und/oder die Netzkomponente NK2 erfolgt, hat eine Einteilung in eine Zustandskategorie zur Folge. Beispielsweise könnten die Zustandskategorien "gut" und "schlecht" vorgesehen werden. Die Zuordnung der kritischen Strecke in eine Zustandskategorie hat zur Folge, dass bei einer Zuordnung zur Zustandskategorie "gut" sämtliche Telegramme über die kritische Strecke KRIT normal übertragen werden. Wird der kritischen Strecke hingegen die Zustandskategorie "schlecht" zugeordnet, so wird ein Fehlerzustand eingenommen. Dies bedeutet, die Übertragung von Telegrammen (sowohl Testtelegramme als auch Nutzdatentelegramme) über die kritische Strecke wird durch wenigstens eine der Netzkomponenten NK1, NK2 blockiert.

Dies hat dann zur Folge, dass die Redundanzmanagementfunktionalität MRM des MRP-Ringes keine Testtelegramme mehr empfangen kann und daraufhin eine Neuorganisation der Kopplungselemente SW des Kommunikationsnetzwerks vornimmt. Als Ergebnis wird die "schlechte" Verbindung durch eine in dem MRP-Ring vorhandene redundante Strecke "ersetzt". Weiter können keine kreisenden Telegramme entstehen. Das Verhalten der kritischen Strecke KRIT wird dadurch dem idealisierten Verhalten einer kabelgebundenen Kommunikationsverbindung angenähert. Dies bedeutet, entweder werden keine Telegramme übertragen oder es werden zuverlässig sowohl Testtelegramme als auch Nutzdaten übertragen.

Ist die kritische Strecke KRIT der Zustandskategorie "schlecht" zugeordnet worden, so wird vorzugsweise weiterhin eine kontinuierliche Überprüfung der Übertragungseigenschaften der kritischen Strecke KRIT vorgenommen. Die Überprüfung hat jedes Mal die Zuordnung der kritischen Strecke KRIT in eine der gewählten Zustandskategorien zur Folge. Wird die kritische Strecke KRIT nach den verwendeten Kriterien wieder der Zustandskategorie "gut" zugeordnet, so kann die Übertragung von Testtelegrammen und Nutzdaten über die kritische Strecke wieder aufgenommen werden. Dies hat zur Folge, dass die Redundanzmanagementeinheit MRM wieder inaktiv wird. In dieser Ausgestaltung ist es bevorzugt, eine ausreichende Hysterese vorzusehen, um ein schnelles Hin- und Herschalten der gewählten Zustandskategorien zu vermeiden.

Es versteht sich, dass die oben beschriebenen Zustandskategorien "gut" und "schlecht" lediglich beispielhaft sind. Die Zustandskategorien könnten auch durch Flags oder andere die Zustandskategorie eindeutig identifizierende Informationen ersetzt werden.

Wurde die kritische Strecke KRIT bei der Überprüfung der Zustandskategorie "schlecht" zugeordnet, so kann von einer der Netzkomponenten NK1, NK2 ein Alarm-Telegramm an einen ausgewählten Rechner, der an eine der Netzkomponenten NK1, NK2 O― der eines der anderen Kopplungselemente SW angeschlossen ist, übertragen werden. Dies ermöglicht die Ergreifung von Gegenmaßnahmen zur Wiederherstellung der Qualität der kritischen Strecke. Bei einer drahtlosen Kommunikationsverbindung könnten diese bspw. in der Ermittlung eventueller Störer, den Wechsel des Funkkanals, usw. bestehen. Darüber hinaus wird einem Administrator des Kommunikationsnetzwerks durch die aktiv werdende Redundanzmanagementeinheit die Information, dass im MRP-Ring ein Problem besteht, gegeben.

Der Zuordnung der kritischen Strecke KRIT in die Zustandskategorie "schlecht" kann eine weitere Prüfung dahingehend nachgeschaltet werden, dass die Unterbrechung der Datenübertragung über die kritische Strecke KRIT nur dann durchgeführt wird, wenn der MRP-Ring ansonsten an keiner anderen Stelle im MRP-Ring unterbrochen ist. Hierdurch wird sichergestellt, dass durch die Blockierung der kritischen Strecke KRIT keine zusätzliche Ringunterbrechung verursacht wird. In einem solchen Fall ist es günstiger, die, wenn auch unter Umständen geringe, Datenrate der gestörten kritischen Strecke nutzen zu können.

Die Überprüfung, ob die Blockierung der kritischen Strecke vorgenommen werden kann oder nicht, kann durch die Netzkomponenten NK1, NK2 selbsttätig vorgenommen werden. Hierzu tauschen die Netzkomponenten NK1, NK2 jeweils über den Koppelport (P1 im Falle von NK1, P2 im Falle von NK2) kontinuierlich Statustelegramme aus. Hierbei wird überprüft, ob ein von der Netzkomponente NK1 ausgesendetes Telegramm von NK2 empfangen werden kann oder nicht, und umgekehrt. Wenn der Ring auf einer der Kommunikationsverbindungen unterbrochen ist, kann ein von einer Netzkomponente ausgesendetes Telegramm nicht von der anderen Netzkomponente empfangen werden.

Aufgrund der unter Umständen geringeren verfügbaren Bandbreite der kritischen Strecke KRIT gegenüber den herkömmlichen Kommunikationsverbindungen KV stellt die kritische Strecke im MRP-Ring unter Umständen einen Flaschenhals dar. Dies kann dazu führen, dass ein sendender Netzknoten NK1, NK2 Telegramme verwirft, die dieser über seinen mit der Kommunikationsverbindung KV gekoppelten Koppelport empfängt. Dabei können auch Testtelegramme verworfen werden, was zur Folge haben kann, dass der MRP-Ring von der Redundanzmanagementfunktionalität MRM nicht als geschlossen erkannt wird, obwohl bereits Telegramme in dem MRP-Ring kreisen.

Diesem Problem könnte dadurch entgegengewirkt werden, dass alle Telegramme, die eine Netzkomponente NK1, NK2 über den mit einer der Kommunikationsverbindungen KV verbundenen Koppelport empfängt, unter Berücksichtigung von Prioritäten weitergeleitet werden. Dabei wird Test- oder Protokolltelegrammen eine höhere Priorität als Nutzdaten eingeräumt. Diese Art der Priorisierung wird allerdings nicht durch alle Netzkomponenten, insbesondere Access Points, unterstützt.

In Fig. 6 ist die Situation dargestellt, in der den jeweiligen Kommunikationsverbindungen KV sowie der kritischen Strecke KRIT eine jeweils mögliche Datenrate zugeordnet ist. Die Datenrate der kritischen Strecke KRIT beträgt X, die Datenrate der anderen Kommunikationsverbindungen beträgt Y, wobei Y größer als X ist.

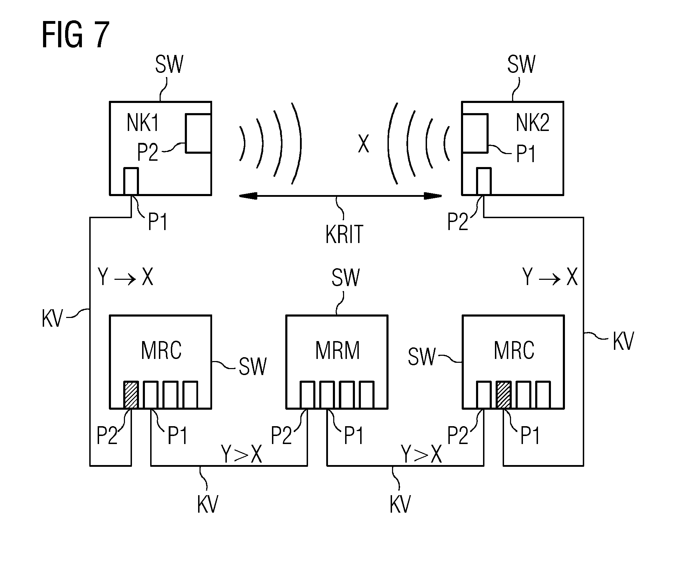

Demgegenüber sieht die Ausgestaltung gemäß Fig. 7 vor, die mit den Netzkomponenten über die Kommunikationsverbindungen KV gekoppelten Kopplungselemente, welche Nachbar-Kopplungselemente NSW darstellen, derart zu konfigurieren, dass die Datenrate des ausgesandten Datenstroms nur so hoch ist, dass diese von der angeschlossenen Netzkomponente NK1 oder NK2 verlustfrei weiter verarbeitet werden kann. Die ausgehende Datenrate Y wird damit an die Datenrate X der kritischen Strecke KRIT angepasst (Y→X). Die Konfiguration erfolgt derart, dass die Nachbar-Kopplungselemente NSW Protokoll- und Testtelegramme an die angeschlossenen Netzkomponenten NK1 bzw. NK2 hoch prior gegenüber der übrigen Kommunikation weiterleiten. Wenn somit Telegramme verworfen werden müssen, dann handelt es sich bevorzugt um Nutzdatentelegramme. Das Verwerfen von Telegrammen erfolgt, wie aus der vorangegangenen Beschreibung ohne weiteres ersichtlich, dabei nicht mehr in den Netzkomponenten NK1, NK2, sondern den Nachbar-Kopplungselementen NSW.

Die Konfiguration der Nachbar-Kopplungselemente NSW kann bspw. durch einen Administrator des Kommunikationsnetzwerks erfolgen. Ebenso ist ein automatisiertes Verfahren möglich, bei dem sich die Netzkomponenten NK1, NK2 mit ihren Nachbar-Kopplungselementen NSW über Aktivierung und Konfiguration des Verfahrens verständigen. Von Vorteil hierbei ist, dass die Netzkomponenten NK1, NK2 zunächst die mögliche Datenrate über die kritische Strecke ermitteln können. In einem darauf folgenden Schritt erfolgt die Anpassung der Datenrate in den Nachbar-Kopplungselementen auf die von den Netzkomponenten ermittelte, maximal mögliche Datenrate.

Diese Ausgestaltung nutzt die Fähigkeit der als Switches ausgebildeten Nachbar-Kopplungselemente zur Priorisierung von Telegrammen, die in Netzkomponenten für eine mit Bridging-oder Routing-Technologien aufgebaute kritische Strecke oftmals nicht vorhanden sind.

In einer figürlich nicht dargestellten Ausgestaltung kann eine drahtlos ausgebildete kritische Strecke durch zwei Dual Band-Netzkomponenten realisiert sein. Im Falle einer WLAN-Verbindung werden die Netzkomponenten NK1, NK2 durch Dual Band-Access Points (Dual Band AP) realisiert, die als Wireless Distribution System (WDS) betrieben werden. Dual Band APs verfügen über mindestens zwei Funkmodule, die jeweils in mindestens zwei verschiedenen Frequenzbändern arbeiten können, bspw. bei 2,4 GHz und 5 GHz. Ein solcher Dual Band AP kann damit gleichzeitig in den beiden Frequenzbändern arbeiten. Die Dual Band APs werden derart konfiguriert, dass diese Testtelegramme in dem MRP-Ring redundant versenden. Hierzu werden Testtelegramme im sendenden Dual Band AP dupliziert. Das Originaltesttelegramm und das duplizierte Testtelegramm werden jeweils über eines der beiden Funkmodule gesendet. Im empfangenden AP wird die erste empfangene Kopie eines Testtelegramms weitergeleitet. Später eintreffende Kopien werden dagegen verworfen. Durch die redundante Übertragung der Testtelegramme, insbesondere auf unterschiedlichen Kanälen, wird die Robustheit der Übertragung erhöht.

Demgegenüber brauchen Nutzdatentelegramme nicht dupliziert werden. Diese werden in einer Ausgestaltung über eines der beiden Funkmodule übertragen.

Die Funkmodule arbeiten bevorzugt auf unterschiedlichen Kanälen, welche - wie erläutert - in unterschiedlichen Frequenzbändern liegen können.

Analog zur vorangegangenen Beschreibung können Netzkomponenten auch mehr als zwei Funkmodule aufweisen. Arbeitet ein Funkmodul mit mehreren Streams, kann auch pro Stream ein Duplikat gesendet werden.

Optional kann auch eine Duplikation von Nutzdatentelegrammen erfolgen. Original- und dupliziertes Nutzdatentelegramm werden dann ebenfalls über jeweils verschiedene Funkmodule übertragen. Durch die redundante Übertragung wird auch hier die Robustheit der Übertragung der Nutzdatentelegramme erhöht. Alternativ können die Nutzdatentelegramme ohne Duplikation auch auf die mehreren Funkmodule eines Dual Band APs verteilt werden. Hierdurch wird die Übertragungsbandbreite aller genutzten Funkmodule gebündelt.

Im Ergebnis wird das Verhalten der kritischen Strecke dem idealisierten Verhalten einer kabelgebundenen Kommunikationsverbindung angenähert, d.h. die Zuverlässigkeit der Übertragung sowohl von Testtelegrammen als auch von Nutzdaten kann gesteigert werden.

In einer weiteren, ebenfalls nicht figürlich dargestellten Ausgestaltungsvariante wird die Stabilität der Datenübertragung des MRP-Rings dadurch erhöht, dass die Wahrscheinlichkeit der Übertragung der Testtelegramme über die kritische Strecke KRIT erhöht wird. In dieser Ausgestaltung wird davon ausgegangen, dass die kritische Strecke KRIT eine Funkstrecke gemäß IEEE 802.11 (WLAN) ist. Dann lassen sich im MAC (Media Access Control) von, den Standard IEEE 802.11 unterstützenden Komponenten mehrere Mechanismen zur Erhöhung der Übertragungswahrscheinlichkeit von Testtelegrammen nutzen. Insbesondere dienen diese Mechanismen dazu, Testtelegramme auch bei schlechter Verbindungsqualität zu übertragen.

Hierzu sind folgende Möglichkeiten bekannt:

### 1. Anzahl der Widerholungen (Retries) für Testtelegramme bei fehlerhafter Übertragung erhöhen

Wird ein Telegramm nicht fehlerfrei übertragen, sendet der Empfänger keine Bestätigungsnachricht (ACK, acknowledge), das den erfolgreichen Empfang bestätigt. Der Sender unternimmt dann eine einstellbare Anzahl erneuter Sendeversuche. Diese Zahl ist typischerweise auf einen niedrigen Wert, z.B. acht, begrenzt. Wird die Zahl für Testtelegramme erhöht, z.B. auf 32 oder 64, versucht der Sender öfter und länger, das Telegramm zu übertragen. Übertragungsversuche sollten nicht über eine vorgegebene Zeitspanne hinaus vorgenommen weden, nach der die Redundanzmanagementfunktionalität ein Testtelegramm als verloren erkennt.

### 2. Kürzere Backoff-Zeit für Testtelegramme bei CSMA/CA.

Ein Sendevorgang wird durch das sog. CSMA/CA (Carrier Sense Multiple Access/Collision Avoidance)-Verfahren gesteuert. Dabei wird zuerst das Übertragungsmedium abgehört. Ist das Medium belegt, wird nicht gesendet, sondern gewartet, bis das Medium frei ist. Ist das Medium frei, wird nicht sofort gesendet, sondern erst nach Ablauf einer sog. Backoff-Zeit. Die Backoff-Zeit wird zufällig aus einem Bereich gewählt, der nach unten von einer Mindestzeit und nach oben von einer Maximalzeit begrenzt wird. Die Maximalzeit wächst mit der Zahl erfolgloser Sendeversuche bis zu einem Grenzwert an. Ein entsprechendes Vorgehen ist in dem Standard IEEE 802.11 beschrieben und dem Fachmann bekannt.

Für das Senden von Testtelegrammen soll die Backoff-Zeit verringert werden. Dies hat zur Folge, dass die Verzögerung bis zum Senden geringer ausfällt und Testtelegramme eine höhere Priorität als Telegramme anderer Funkteilnehmer bekommen, da sie statistisch betrachtet eher gesendet werden als diese.

Die Backoff-Zeit lässt sich durch Änderungen im Algorithmus für ihre Berechnung verkleinern, z.B. durch das Verändern eines Intervallbereichs für die pseudozufällige Integerzahl zur Ermittlung der Backoff-Zeit.

### 3. Testtelegramme mit niedriger Datenrate übertragen

Unabhängig von den manuellen oder automatischen Einstellungen der Datenrate werden Testtelegramme immer mit einer niedrigen Datenrate übertragen. Die Übertragung ist dadurch deutlich robuster und dauert durch den geringen Anteil an Nutzdaten nur unwesentlich länger. Die höhere Robustheit entsteht bspw. durch eine höhere Empfängerempfindlichkeit sowie eine bessere Unterdrückung von Nachbarkanälen bei niedrigen Datenraten.

## Patentansprüche

1. Verfahren in einem Kommunikationsnetzwerk, umfassend eine Mehrzahl an Kopplungselementen (SW), welche jeweils zumindest einen ersten und einen zweiten Koppelport (P1, P2) aufweisen, wobei die Kopplungslemente (SW) über Kommunikationsverbindungen (KV) physikalisch in Ringtopologie verschaltet sind, indem eine jeweilige Kommunikationsverbindung (KV) den ersten Koppelport (P1) eines Kopplungselements (SW) mit dem zweiten Koppelport (P2) eines anderen Kopplungselements (SW) verbindet, wobei in einem der Kopplungselemente (SW) eine Redundanzmanagementfunktionalität (MRM) implementiert ist, welche zwecks Bereitstellung eines Redundanzverfahrens in einem Normalfall über einen der Koppelports (P1, P2) dieses Kopplungselements (SW) keine in dem Kommunikationsnetzwerk übertragenen Telegramme weiterleitet, bei dem eine der Kommunikationsverbindungen (KV) zwischen einem ersten und einem zweiten Kopplungselement (NK1, NK2) als kritische Strecke (KRIT) ausgebildet ist, welche andere, insbesondere schlechtere Übertragungseigenschaften als die übrigen Kommunikationsverbindungen (KV) aufweist, bei dem
die Redundanzmanagementfunktionalität (MRM) in dem ersten oder dem zweiten Kopplungselement (NK1, NK2) vorgesehen wird, welche in dem Normalfall standardisiert den mit der kritischen Strecke (KRIT) verbundenen Koppelport (P2) logisch abschaltet.

2. Verfahren nach Anspruch 1, bei dem die Redundanzmanagementfunktionalität (MRM) dazu ausgebildet ist, die kritische Strecke (KRIT) in einem Redundanzfall, in dem eine der Kommunikationsverbindungen (KV) oder eines der Kopplungselemente (SW) ausgefallen ist, zu aktivieren.

3. Verfahren nach Anspruch 1 oder 2, bei dem die Redundanzmanagementfunktionalität (MRM) sowohl in dem ersten als auch in dem zweiten Kopplungselement (NK1, NK2) implementiert ist und in dem Kommunikationsnetzwerk eine virtuelle, die Redundanzmanagementfunktionalität (MRM) umfassende Redundanzmanagementeinheit (MRME) ausbildet.

4. Verfahren nach einem der Ansprüche 3, bei dem durch das erste und das zweite Kopplungselement (NK1, NK2) unabhängig voneinander über ihre Koppelports (P1, P2), welche nicht mit der kritischen Strecke (KRIT) verbunden sind, Testtelegramme (T) des Redundanzverfahrens ausgesendet und/oder empfangen und ausgewertet werden.

5. Verfahren nach Anspruch 4, **dadurch gekennzeichnet, dass** das erste und das zweite Kopplungselement (NK1, NK2) über die kritische Strecke Zustandsinformationen austauschen, welche das Aussenden und/oder den Empfang der Testtelegramme betreffen.

6. Verfahren in einem Kommunikationsnetzwerk, umfassend eine Mehrzahl an Kopplungselementen (SW), welche jeweils zumindest einen ersten und einen zweiten Koppelport (P1, P2) aufweisen, wobei die Kopplungslemente (SW) über Kommunikationsverbindungen (KV) physikalisch in Ringtopologie verschaltet sind, indem eine jeweilige Kommunikationsverbindung (KV) den ersten Koppelport (P1) eines Kopplungselements (SW) mit dem zweiten Koppelport (P2) eines anderen Kopplungselements (SW) verbindet, wobei in einem der Kopplungselemente (SW) eine Redundanzmanagementfunktionalität (MRM) implementiert ist, welche zwecks Bereitstellung eines Redundanzverfahrens in einem Normalfall über einen der Koppelports (P1, P2) dieses Kopplungselements (SW) keine in dem Kommunikationsnetzwerk übertragenen Telegramme weiterleitet, bei dem eine der Kommunikationsverbindungen (KV) zwischen einem ersten und einem zweiten Kopplungselement (NK1, NK2) als kritische Strecke (KRIT) ausgebildet ist, welche andere, insbesondere schlechtere Übertragungseigenschaften als die übrigen Kommunikationsverbindungen (KV) aufweist, bei dem
die kritische Strecke nach der Durchführung einer Prüfung bezüglich ihrer Verbindungseigenschaften nach zumindest einem vorgegebenen Kriterium einer ersten oder einer zweiten Zustandskategorie zugeordnet wird, wobei bei einer Zuordnung der kritischen Strecke (KRIT) in die erste Zustandskategorie die Übertragung von Telegrammen über die kritische Strecke (KRIT) durch das erste und/oder das zweite Kopplungselement (Nk1, NK2) unterbunden wird.

7. Verfahren nach Anspruch 6, bei dem die kritische Strecke (KRIT) unabhängig von ihrer gegenwärtigen Zustandskategorie bezüglich ihrer Verbindungseigenschaften überprüft wird, wobei bei einem Wechsel von der ersten Zustandskategorie zu der zweiten Zustandskategorie eine Übertragung von Telegrammen über die kritische Strecke (KRIT) wieder zugelassen wird.

8. Verfahren nach Anspruch 6 oder 7, bei dem ein Wechsel von der ersten Zustandskategorie zu der zweiten Zustandkategorie, und umgekehrt, mit einer Hysterese erfolgt.

9. Verfahren nach einem der Ansprüche 6 bis 8, bei dem bei einer der ersten Zustands kategorie zugeordneten kritischen Strecke (KRIT) die Übertragung von Telegrammen über die kritische Strecke (KRIT) durch das erste und/oder das zweite Kopplungselement (NK1, NK2) nur dann unterbunden wird, wenn der Kommunikationsring an keiner anderen Stelle unterbrochen ist.

10. Verfahren nach einem der vorhergehenden Ansprüche, bei dem eine lokale Prüfung und/oder Überwachung der kritischen Strecke (KRIT) mit an die kritische Strecke angepassten Kriterien durch das erste und das zweite Kopplungselement (Nk1, NK2) durchgeführt wird.

11. Verfahren nach einem der vorhergehenden Ansprüche, bei dem Nachbar-Kopplungselemente (SW), die über die Kommunikationsverbindungen (KV) unmittelbar mit dem ersten und dem zweiten Kopplungselement (NK1, NK2) verbundenen sind, derart konfiguriert werden, dass eine Datenrate des von ihnen ausgesandten Datenstroms (Y) gerade so bemessen ist, dass der über die kritische Strecke geführte Datenstrom (X) von dem ersten und dem zweiten Kopplungslement (NK1, NK2) verlustfrei weiterverarbeitet werden kann.

12. Verfahren nach Anspruch 11, bei dem Test- und/oder Protokolltelegramme (T) des Redundanzverfahrens von den Nachbar-Kopplungselementen (SW) hochprior gegenüber Nutzdaten umfassenden Telegrammen an das erste und das zweite Kopplungselement (Nk1, NK2) weitergeleitet werden.

13. Verfahren nach einem der vorhergehenden Ansprüche, bei dem die kritische Strecke (KRIT) zwei voneinander unabhängige Datenübertragungskanäle, insbesondere unterschiedlicher Übertragungsmechanismen, umfasst, über die gleichzeitig zumindest die Testtelegramme des Redundanzverfahrens redundant übertragen werden.

14. Verfahren nach Anspruch 13, bei dem das durch das empfangende Kopplungselement des ersten und zweiten Kopplungselements (NK1, NK2) zuerst über einen der Datenübertragungskanäle empfangene Testdiagramm verarbeitet wird und das zeitlich später empfangene Testdiagramm verworfen wird.

15. Verfahren nach einem der vorhergehenden Ansprüche, bei dem die Wahrscheinlichkeit der Übertragung von Testtelegrammen über die kritische Strecke (KRIT) erhöht wird, indem die Übertragung eines oder mehrerer Protokollparameter des Übertragungsverfahrens der kritischen Strecke (KRIT) adaptiert werden.

16. Kopplungselement für eine kritische Strecke in Kommunikationsnetzwerk, wobei das Kommunikationsnetzwerk folgendes umfasst:
eine Mehrzahl an Kopplungselementen (SW), welche jeweils zumindest einen ersten und einen zweiten Koppelport (P1, P2) aufweisen, wobei die Kopplungslemente (SW) über Kommunikationsverbindungen (KV) physikalisch in Ringtopologie verschaltet sind, indem eine jeweilige Kommunikationsverbindung (KV) den ersten Koppelport (P1) eines Kopplungselements (SW) mit dem zweiten Koppelport (P2) eines anderen Kopplungselements (SW) verbindet, wobei in einem der Kopplungselemente (SW) eine Redundanzmanagementfunktionalität (MRM) implementiert ist,
welche zwecks Bereitstellung eines Redundanzverfahrens in einem Normalfall über einen der Koppelports (P1, P2) dieses Kopplungselements (SW) keine in dem Kommunikationsnetzwerk übertragenen Telegramme weiterleitet, bei dem eine der Kommunikationsverbindungen (KV) zwischen einem ersten und einem zweiten Kopplungselement (NK1, NK2) als kritische Strecke (KRIT) ausgebildet ist, welche andere, insbesondere schlechtere Übertragungseigenschaften als die übrigen Kommunikationsverbindungen (KV) aufweist,
**dadurch gekennzeichnet, dass**
die in dem ersten oder dem zweiten Kopplungselement (NK1, NK2) vorgesehene Redundanzmanagementfunktionalität (MRM) dazu ausgebildet ist, in dem Normalfall standardisiert den mit der kritischen Strecke (KRIT) verbundenen Koppelport (P2) logisch abzuschalten.

17. Kopplungselement für ein Kommunikationsnetzwerk, wobei das Kommunikationsnetzwerk folgendes umfasst:
eine Mehrzahl an Kopplungselementen (SW), welche jeweils zumindest einen ersten und einen zweiten Koppelport (P1, P2) aufweisen, wobei die Kopplungslemente (SW) über Kommunikationsverbindungen (KV) physikalisch in Ringtopologie verschaltet sind, indem eine jeweilige Kommunikationsverbindung (KV) den ersten Koppelport (P1) eines Kopplungselements (SW) mit dem zweiten Koppelport (P2) eines anderen Kopplungselements (SW) verbindet, wobei in einem der Kopplungselemente (SW) eine Redundanzmanagementfunktionalität (MRM) implementiert ist,
welche zwecks Bereitstellung eines Redundanzverfahrens in einem Normalfall über einen der Koppelports (P1, P2) dieses Kopplungselements (SW) keine in dem Kommunikationsnetzwerk übertragenen Telegramme weiterleitet, bei dem eine der Kommunikationsverbindungen (KV) zwischen einem ersten und einem zweiten Kopplungselement (NK1, NK2) als kritische Strecke (KRIT) ausgebildet ist, welche andere, insbesondere schlechtere Übertragungseigenschaften als die übrigen Kommunikationsverbindungen (KV) aufweist,
**gekennzeichnet durch**
Mittel zum Verarbeiten von Verbindungseigenschaften, welche die kritische Strecke nach der Durchführung einer Prüfung bezüglich ihrer Verbindungseigenschaften nach zumindest einem vorgegebenen Kriterium einer ersten oder einer zweiten Zustandskategorie zuordnen und bei einer Zuordnung der kritischen Strecke (KRIT) in die erste Zustandskategorie die Übertragung von Telegrammen über die kritische Strecke (KRIT) **durch** das erste und/oder das zweite Kopplungselement (Nk1, NK2) unterbinden.

18. Kommunikationsnetzwerk, umfassend eine Mehrzahl an Kopplungselementen (SW), welche jeweils zumindest einen ersten und einen zweiten Koppelport (P1, P2) aufweisen, wobei die Kopplungslemente (SW) über Kommunikationsverbindungen (KV) physikalisch in Ringtopologie verschaltet sind, indem eine jeweilige Kommunikationsverbindung (KV) den ersten Koppelport (P1) eines Kopplungselements (SW) mit dem zweiten Koppelport (P2) eines anderen Kopplungselements (SW) verbindet, wobei in einem der Kopplungselemente (SW) eine Redundanzmanagementfunktionalität (MRM) implementiert ist, welche zwecks Bereitstellung eines Redundanzverfahrens in einem Normalfall über einen der Koppelports (P1, P2) dieses Kopplungselements (SW) keine in dem Kommunikationsnetzwerk übertragenen Telegramme weiterleitet, bei dem eine der Kommunikationsverbindungen (KV) zwischen einem ersten und einem zweiten Kopplungselement (NK1, NK2) als kritische Strecke (KRIT) ausgebildet ist, welche andere, insbesondere schlechtere Übertragungseigenschaften als die übrigen Kommunikationsverbindungen (KV) aufweist, **dadurch gekennzeichnet, dass**
dieses zumindest ein Kopplungselement (NK1, NK2) nach Anspruch 16 oder 17 aufweist.
